# EUROPÄISCHE PATENTSCHRIFT

(11) **EP 3 283 350 B1**
(45) Veröffentlichungstag und Bekanntmachung des Hinweises auf die Patenterteilung: **06.11.2019**
(21) Anmeldenummer: 16716531.5
(22) Anmeldetag: 12.04.2016
(51) Int. Cl.: B62D 15/02, G08G 1/14, G08G 1/16, B60W 30/06, G06F 3/0488, G05D 1/00, G05D 1/02, G06K 9/00, G06F 3/0481

(54) **SIGNALISIEREN VON INFORMATION ÜBER EINE ERKANNTE PARKLÜCKE AN DEN BEDIENER EINER FERNBEDIENUNG FÜR EIN PER FERNBEDIENUNG KONTROLLIERBARES PARKASSISTENZSYSTEM ZUM AUTOMATISIERTEN EINPARKEN EINES KRAFTFAHRZEUGS**
SIGNALING INFORMATION ON A DETECTED PARKING SPACE TO THE OPERATOR OF A REMOTE CONTROL FOR A PARKING ASSISTANCE SYSTEM WHICH CAN BE CONTROLLED BY REMOTE CONTROL FOR AUTOMATICALLY PARKING A MOTOR VEHICLE
SIGNALISATION À L'UTILISATEUR D'UNE COMMANDE À DISTANCE D'UN SYSTÈME D'ASSISTANCE AU STATIONNEMENT POUVANT ÊTRE CONTRÔLÉ PAR UNE COMMANDE À DISTANCE D'UNE INFORMATION CONCERNANT UN EMPLACEMENT DE STATIONNEMENT IDENTIFIÉ AFIN DE STATIONNER DE MANIÈRE AUTOMATISÉE UN VÉHICULE AUTOMOBILE

(30) Priorität: 17.04.2015 DE 102015206998; 30.04.2015 DE 102015208124
(43) Veröffentlichungstag der Anmeldung: 21.02.2018
(73) Patentinhaber: Bayerische Motoren Werke Aktiengesellschaft, 80809 München (DE)
(72) Erfinder: LIDORIS, Georgios, 80337 München (DE); PASCAL, Rebecca, 81476 München (DE); MESSNER, Alex, 39030 Rasun (IT)
(86) Internationale Anmeldenummer: PCT/EP2016/057980
(87) Internationale Veröffentlichungsnummer: WO 2016/166086

(56) Entgegenhaltungen:
- EP-A2- 2 292 497
- DE-A1- 10 261 176
- DE-A1-102012 007 984
- DE-A1-102012 203 235
- JP-A- 2006 302 187
- US-A1- 2008 033 603

## Beschreibung

Die Erfindung betrifft per Fernbedienung von außerhalb eines Kraftfahrzeugs kontrollierbare Parkassistenzsysteme zum automatisierten Einparken des Kraftfahrzeugs in eine Parklücke.

Es sind verschiedene Arten von Parkassistenzsystemen bekannt. Einfache Einparkassistenten umfassen eine Umfeld-Sensorik, beispielsweise eine Radar-Sensorik oder eine Ultraschall-Sensorik, zum Erkennen von Hindernissen, wobei in optischer und/oder akustischer Weise der Abstand zu dem erkannten Hindernis dem Fahrer mitgeteilt wird. Darüber sind Parkassistenzsysteme mit automatisierter Querführung bekannt, die dem Fahrer die Fahraufgabe der Lenkung beim Einparken abnehmen und das Fahrzeug entlang einer berechneten Einparktrajektorie in eine Längsparklücke oder eine Querparklücke steuern, wobei der Fahrer weiterhin das Brems- und Fahrpedal betätigt. Darüber hinaus sind Parkassistenzsysteme mit automatisierter Quer- und Längsführung bekannt, die zusätzlich noch den Antrieb und die Bremse steuern. Das Parkassistenzsystem führt dabei die Fahraufgabe solange aus, wie der Fahrer einen Taster im Fahrzeug betätigt. Über den Taster im Fahrzeug übt der Fahrer eine Kontrolle auf den Einparkvorgang aus. Bei diesen Einparkassistenten verbleibt der Fahrer auf dem Fahrersitz. Es sind jedoch Einparkassistenzsysteme bekannt, beispielsweise für in Vorwärtsrichtung oder Rückwärtsrichtung beparkbare Kopfparkplätze (z. B. eine Einzelgarage), bei denen sich der Fahrer während des Einparkvorgangs außerhalb des Fahrzeugs befindet. Die Kontrolle des Einparkvorgangs wird dabei auf eine Fernbedienung verlagert. Derartige Parkassistenzsysteme für Kopfparkplätze werden auch als Garagenparkassistent bezeichnet.

Aus der Druckschrift WO 2013/053776 A2 ist ein per Fernbedienung kontrollierbares Parkassistenzsystem zum automatisierten Einparken in eine Kopfparklücke (insbesondere eine Einzelgarage) beschrieben, wobei die Fernbedienung ein Bedienelement zur Steuerung der Vorwärtsfahrt und ein Bedienelement zur Steuerung der Rückwärtsfahrt umfasst. Wenn das Fahrzeug vor einer Kopfparklücke gehalten wurde, kann der Bediener von außerhalb des Fahrzeugs durch Betätigung des Bedienelements zur Steuerung der Vorwärtsfahrt das Fahrzeug mit automatisierter Längsführung in die Parklücke steuern. Die Fernbedienung dient dabei nicht nur zum Senden von Steuerinformation an das Parkassistenzsystem im Fahrzeug, sondern auch zum Empfang von seitens des Parkassistenzsystems im Fahrzeug bereitgestellter Information über das Vorhandensein einer Hindernisses, wobei das Vorhandensein eines Hindernisses in Vorwärtsrichtung oder Rückwärtsrichtung über Signalisierungsmittel, z. B. über einen Bildschirm auf der Fernbedienung, signalisiert wird.

Zum Stand der Technik wird weiterhin auf die Druckschriften DE 10 2012 007984A1, DE 10 2012 203235 A1, US 2008/033603 A1, JP 2006 302187 A und DE 102 61 176 A1 verwiesen. DE 10 2012 007984 A1 ist als nächstliegender Stand der Technik zu sehen und zeigt ein System und ein Verfahren zum Steuern eines Kraftfahrzeugs mittels eines per Fernbedienung von außerhalb eines Kraftfahrzeugs von dem Bediener der Fernbedienung kontrollierbaren Parkassistenzsystems zum automatisierten Einparken des Kraftfahrzeugs in eine Parklücke, wobei - das Parkassistenzsystem zum Einparken in Kopfparklücken in Vorwärtsfahrt und/oder Rückwärtsfahrt geeignet ist, - die Fernbedienung ein Bedienmittel zur Steuerung der Vorwärtsfahrt und/oder ein Bedienmittel zur Steuerung der Rückwärtsfahrt des Kraftfahrzeugs umfasst, und das Parkassistenzsystem eine automatisierte Querführung umfasst, um das Fahrzeug automatisch gelenkt in die Parklücke zu steuern, wobei das Verfahren die folgenden Schritte umfasst: - seitens des Kraftfahrzeugs, Bestimmen von Umfeldinformation bezüglich des Fahrzeugumfelds mittels einer vom Fahrzeug umfassten Umfeld-Sensorik; und - seitens des Kraftfahrzeugs, Erkennen einer Parklücke basierend auf der Umfeldinformation.

Es ist Aufgabe der Erfindung, ein verbessertes, per Fernbedienung kontrollierbares Parkassistenzsystem zum automatisierten Einparken und ein entsprechendes Verfahren zum Steuern eines Kraftfahrzeugs über ein derartiges Parkassistenzsystem anzugeben.

Die Aufgabe wird durch die Merkmale der unabhängigen Patentansprüche gelöst. Vorteilhafte Ausführungsformen sind in den abhängigen Ansprüchen beschrieben.

Ein erster Aspekt der Erfindung betrifft ein Verfahren zum Steuern eines Kraftfahrzeugs mittels eines per Fernbedienung von außerhalb des Kraftfahrzeugs kontrollierbaren Parkassistenzsystems zum automatisierten Einparken des Kraftfahrzeugs in eine Parklücke.

Hierbei handelt es sich um ein Parkassistentensystem zum (frontalen und/oder rückwärtigen) Einparken in eine Kopfparklücke, insbesondere zum Einparken in eine frontal befahrbare Kopfparklücke (beispielsweise eine Einzelgarage oder Doppelgarage). Das Parkassistenzsystem umfasst eine automatisierte Längsführung und auch eine automatisierte Querführung. Beispielsweise unterstützt das Parkassistenzsystem das automatisierte Einlenken in eine vom System erkannte Kopfparklücke bei leicht schräg vor der Kopfparklücke abgestelltem Kraftfahrzeug. Da das Parkassistenzsystem eine automatisierte Querführung umfasst, kann das Fahrzeug automatisch gelenkt in die Parklücke gesteuert werden. Beispielsweise kann so ein lateraler Versatz zwischen dem Fahrzeug und der Parklücke oder ein Ausrichtungsunterschied zwischen dem Fahrzeug und der Parklücke bei einem vor der Kopfparklücke abgestellten Fahrzeug durch die automatisierte Querführung ausgeglichen werden.

Wie vorstehend bereits ausgeführt, handelt es sich bei dem Parkassistenzsystem um ein Parkassistenzsystem, welches zum Einparken in vor dem Kraftfahrzeug gelegene Kopfparklücken in Vorwärtsfahrt geeignet ist (wobei das Fahrzeug mit der Front vor der Parklücke abgestellt wird), und welches zusätzlich oder alternativ auch für ein rückwärtiges Einparken in Kopfparklücken geeignet ist (wobei das Fahrzeug mit dem Heck vor der Parklücke abgestellt wird). Dazu umfasst die Fernbedienung ein Bedienmittel zur Steuerung der Vorwärtsfahrt und/oder ein Bedienmittel zur Steuerung der Rückwärtsfahrt des Kraftfahrzeugs. Beispielsweise handelt es sich um ein Parkassistenzsystem, welches zum Einparken zumindest in Vorwärtsrichtung geeignet ist, und welches auf einem berührungsempfindlichen Bildschirm (Touchscreen) der Fernbedienung eine virtuelle Bedientaste zur Kontrolle der Vorwärtsfahrt und eine virtuelle Bedientaste zur Kontrolle der Rückwärtsfahrt darstellt, bei deren jeweiliger Berührung das Fahrzeug in Vorwärts- bzw. Rückwärtsfahrt versetzt wird und die Vorwärtsfahrt bzw. Rückwärtsfahrt solange beibehalten wird, bis die Berührung beendet wird oder eine sonstige Abbruchbedingung (z. B. ein kritisches Hindernis oder das Erreichen des maximalen Verfahrwegs) zum Abbruch der Bewegung erfüllt ist. Statt virtueller Tasten auf einem berührungsempfindlichen Bildschirm können alternativ oder zusätzlich auch physikalische Tasten für die Kontrolle der Vorwärts- und Rückwärtsfahrt vorgesehen werden.

Gemäß dem Verfahren wird seitens des Kraftfahrzeugs Umfeldinformation bezüglich des Fahrzeugumfelds mittels einer vom Fahrzeug umfassten Umfeld-Sensorik bestimmt, beispielsweise mittels einer Ultraschallsensorik in der Fahrzeugfront und/oder mittels einer nach vorne gerichteten Kamera im Fahrzeug. Es werden beispielsweise mittels der Umfeld-Sensorik die Lage von Objekten, beispielsweise die Lage von seitlichen Begrenzungen einer Parklücke wie Fahrzeugen, seitliche Wände eines Stellplatzes oder auf dem Boden aufgebrachten Markierungen, bestimmt und diese Objekte in einer Umfeldkarte des Fahrzeugumfelds eingetragen.

Das Parkassistenzsystem im Kraftfahrzeug erkennt basierend auf der Umfeldinformation eine Parklücke. Beispielsweise werden im Rahmen der Erkennung einer Parklücke ein linker und einer rechter Ankerpunkt (typischerweise die beiden Eckpunkte), welche den Eingang der Parklücke kennzeichnen, sowie eine linke und eine rechte seitliche Parklückenausrichtungsgerade gesucht, die durch die beiden seitlichen Begrenzungsobjekte der Parklücke definiert werden. Die Parklückenausrichtungsgerade hat vorzugsweise keine definierte Länge und ist vorzugsweise beliebig lang. Eine Parklücke wird beispielsweise dann als erkannt gewertet, wenn mindestens ein Ankerpunkt und eine seitliche Parklückenausrichtungsgerade auf der gleichen Seite oder ein zweiter Ankerpunkt gefunden werden.

Das Erkennen einer Parklücke erfolgt beispielsweise bei Starten des Motors vor dem Losfahren. Die Bestimmung der Umfeldinformation und der Aufbau der Umfeldkarte erfolgen aber bereits vorzugsweise vor dem Abstellen des Fahrzeugs. Vorzugsweise wird im Fall einer nicht erkannten Parklücke während eines automatisierten Parkmanövers fortwährend versucht, eine Parklücke zu erkennen.

Information über das Erkennen einer Parklücke wird vorzugsweise von dem Kraftfahrzeug an die Fernbedienung über eine drahtlose Kommunikationsverbindung gesendet, die dann seitens der Fernbedienung empfangen wird. Basierend auf der empfangenen Information kann die Fernbedienung dem Bediener das Vorliegen einer erkannten Parklücke signalisieren. Sofern beispielsweise anfänglich, insbesondere vor dem Losfahren, keine Parklücke erkannt wurde, ermöglicht es das Parkassistenzsystem vorzugsweise, dass auch später, im Laufe des Parkmanövers eine Parklücke noch erkannt werden kann; das späteren Erkennen der Parklücke wird vorzugsweise dem Fahrer dann über die Fernbedienung mitgeteilt.

Für den Fall, dass keine Parklücke erkannt wurde, wird bei Bedienung des Bedienmittels das Fahrzeug geradeaus ohne Lenkeinschlag in Vorwärtsrichtung bzw. Rückwärtsrichtung automatisiert gesteuert. Es ist dabei von Vorteil, wenn die Parklückenerkennung bei der Geradeausfahrt aktiviert bleibt, so dass im Rahmen der Geradeausfahrt die Parklücke später erkannt werden kann, und ggf. dann eine automatisierte Querführung zum Einparken in die Parklücke aktiviert werden kann. Für den Fall, dass eine Parklücke erkannt wurde, insbesondere für den Fall, dass eine erkannte Parklücke auch als beparkbar erkannt wurde (d. h. die einfache Erkennung Parklücke reicht nicht unbedingt für eine aktive Querführung aus), wird bei Bedienung des Bedienmittels das Fahrzeug mit automatisierter Querführung gelenkt in Vorwärtsrichtung bzw. Rückwärtsrichtung in die Parklücke gesteuert. Dem Bediener wird vorzugsweise seitens der Fernbedienung signalisiert, ob das Fahrzeug geradeaus ohne Lenkeinschlag in Parklücke gesteuert wird, oder das Fahrzeug mit automatisierter Querführung gelenkt in die Parklücke gesteuert wird. Beispielsweise wird bei erkannter, beparkbarer Parklücke ein anderes Piktogramm auf dem Bildschirm einer Fernbedienung dargestellt als bei nicht erkannter Parklücke; das Piktogramm für die erkannte, beparkbare Parklücke signalisiert implizit an den Nutzer, dass das Fahrzeug mit automatisierter Querführung in die Parklücke gelenkt werden wird, wohingegen ein Piktogramm, welches bei nicht erkannter Parklücke auf der Fernbedienung dargestellt wird, für den Nutzer eine Geradeausfahrt signalisiert. Selbstverständlich ist es denkbar, dass die Aussage "gelenktes Einparkmanöver" oder "ungelenktes Parkmanöver" auch explizit dem Fahrer durch ein entsprechendes Piktogramm (z. B. in Form eines dargestellten Lenkrads) bzw. Fehlen dieses Piktogramms oder ein anderes Piktogramm (z. B. ein durchgestrichenes Lenkrad) oder durch einen passenden Texthinweis signalisiert werden kann.

Vorzugsweise wird der Fahrer über die Fernbedienung über den Status der Parklückenerkennung informiert. Das Parkassistenzsystem unterstützt auch eine automatisierte Querführung für eine erkannte Kopfparklücke und steuert das Fahrzeug bei nicht erkannter Kopfparklücke lediglich geradeaus ohne Lenkeinschlag. Der Fahrer weiß, dass bei Ausbleiben der Signalisierung einer erkannten Kopfparklücke oder bei expliziter Signalisierung einer Parksituation mit nicht erkannter Parklücke das Fahrzeug nicht mit automatisierter Querführung in die Kopfparklücke gesteuert werden wird.

Vorzugsweise wird im Rahmen der Erkennung der Parklücke oder nach der Erkennung seitens des Kraftfahrzeugs anhand eines Kriteriums oder mehrerer Kriterien hinsichtlich der Beparkbarkeit festgestellt, dass die Parklücke von der aktuellen Fahrzeuglage aus über das Parkassistenzsystem per Fernbedienung beparkbar ist. Im Fall der Beparkung einer Kopflücke kann ein Kriterium hinsichtlich der Beparkbarkeit der Parklücke die Ausrichtung des Fahrzeugs gegenüber der Parklücke betreffen, z. B. in welchem Winkel stehen das Fahrzeug und die Kopfparklücke zueinander. Es kann beispielsweise zur Feststellung der Beparkbarkeit geprüft werden, dass der Betrag des Winkels zwischen der Ausrichtung des Fahrzeugs und einer Ausrichtung der Parklücke kleiner oder kleiner gleich als ein definierter Schwellwert (z. B. 15° oder 30°) ist. Ein alternatives oder zusätzliches (kumulatives) Kriterium kann den seitlichen (lateralen) Versatz des Fahrzeugs gegenüber der Parklücke betreffen, d. h. inwieweit sind das Fahrzeug und die Kopfparklücke seitlich zueinander versetzt. Es kann beispielsweise im Rahmen der Beparkbarkeit geprüft werden, dass der laterale Versatz eines Referenzpunktes der Parklücke und eines Referenzpunktes des Fahrzeugs kleiner oder kleiner gleich als ein Schwellwert (z. B. 1,0 m oder 1,5 m) ist. Ein alternatives oder zusätzlich geprüftes Kriterium kann die Breite der Parklücke betreffen, d. h. ob die Breite der Parklücke ausreichend ist. Es kann beispielsweise im Rahmen der Beparkbarkeit geprüft werden, ob die Breite der Parklücke größer oder größer gleich als ein definierter Schwellwert (z. B. die Fahrzeugbreite plus 70 cm) ist. Ein alternatives oder zusätzlich geprüftes Kriterium kann den Abstand des Fahrzeugs zur Parklücke betreffen. Der Hintergrund hierfür ist beispielsweise, dass der maximale Verfahrweg begrenzt werden kann (z. B. auf das 1,5-fache der Fahrzeuglänge) und das Fahrzeug dann möglicherweise bei zu großem Abstand nicht vollständig in die Parklücke eintauchen kann. Hierzu kann beispielsweise der Abstand zwischen einem Fahrzeugreferenzpunkt (z. B. die Mitte der Hinterachse) und einem Referenzpunkt der Parklücke (z. B. der Mittelpunkt zwischen den beiden Ankerpunkten) bestimmt werden und geprüft werden, ob dieser Abstand kleiner oder kleiner gleich als ein definierter Schwellwert (z. B. 9 m) ist.

Das Fahrzeug sendet dann bei Feststellen einer beparkbaren Parklücke, die aus der jetzigen Fahrzeugposition per Fernbedienung beparkbar ist, Information über das Erkennen einer beparkbaren Parklücke an die Fernbedienung. Diese Information wird seitens der Fernbedienung empfangen und die Fernbedienung signalisiert das Vorliegen einer erkannten, von der aktuellen Fahrzeuglage aus per Fernbedienung beparkbaren Parklücke an den Bediener der Fernbedienung.

Vorzugsweise kann das Parkassistenzsystem im Kraftfahrzeug mindestens zwei verschiedene Parksituationstypen mit beparkbarer Parklücke mit unterschiedlicher Güte der Beparkbarkeit der Parklücke unterscheiden, z. B. Kopfparklücken, die problemlos in einem Zug in Vorwärtsrichtung oder Rückwärtsrichtung aus der jetzigen Fahrzeugposition aus per Fernbedienung beparkt werden können, und Kopfparklücken, die zwar grundsätzlich über die Fernbedienung beparkt werden können, bei denen aber möglicherweise mehrere Züge erforderlich sind und der Fahrer das Fahrzeug im Laufe eines Einparkvorgangs in Vorwärtsrichtung dann per Fernbedienung das Fahrzeug in Rückwärtsrichtung um eine gewisse Strecke zurücksetzen muss, um dann in Vorwärtsrichtung den Parkvorgang abschließen zu können.

Beispielsweise liegt ein Parksituationstyp mit höherer Güte der Beparkbarkeit vor, wenn ein oder mehrere im Rahmen der Beparkbarkeit geprüfte Parameter innerhalb engerer Grenzen liegen (z. B. kleiner gleich oder kleiner 15° für den Betrag des Ausrichtungsunterschieds zwischen der Parklücke und dem Fahrzeug und kleiner gleich oder kleiner 1 m für den Betrag des seitlichen Versatzes), und eine Parksituationstyp mit im Vergleich dazu geringerer Güte der Beparkbarkeit vor, wenn dieser bzw. diese Parameter innerhalb (im Vergleich zu den engerer Grenzen) weniger engen Grenzen liegen (z. B. kleiner gleich oder kleiner 30° für den Betrag des Ausrichtungsunterschieds zwischen der Parklücke und dem Fahrzeug und kleiner gleich oder kleiner 1,5 m für den Betrag des seitlichen Versatzes). Eine erkannte Parklücke wird beispielsweis als nicht beparkbar typisiert, wenn ein im Rahmen der Beparkbarkeit geprüften Parameter außerhalb der weniger engen Grenzen liegt, beispielsweise bei einem Ausrichtungsunterschied größer 30° oder einem seitlichen Versatz größer 1,5 m.

Im Fall des Feststellens einer Parksituation mit beparkbarer Parklücke mit höherer Güte der Beparkbarkeit wird eine Information über das Vorliegen einer derartigen Parksituation an die Fernbedienung gesendet; nach Empfang dieser Information seitens der Fernbedienung wird das Vorliegen einer beparkbaren Parklücke mit höherer Güte der Beparkbarkeit dem Bediener der Fernbedienung signalisiert.

Im Fall des Feststellens einer Parksituation mit beparkbaren Parklücke mit im Vergleich dazu geringerer Güte der Beparkbarkeit der Parklücke wird eine Information über das Vorliegen einer derartigen Parksituation an die Fernbedienung gesendet; nach Empfang dieser Information seitens der Fernbedienung wird das Vorliegen einer beparkbaren Parklücke mit geringerer Güte der Beparkbarkeit dem Bediener der Fernbedienung signalisiert.

Diese Idee ist nicht nur auf zwei verschiedenen Parksituationstypen mit unterschiedlicher Güte der Beparkbarkeit einer erkannten Parklücke beschränkt: Es wäre auch eine Unterscheidung in mehr als zwei Parksituationstypen mit unterschiedlicher Güte der Beparkbarkeit einer erkannten Parklücke denkbar, beispielsweise 3, 4 oder 5 derartige Typen. Es kann auch eine sehr kleiner Auflösung bei der Unterscheidung gewählt werden.

Beispielsweise sind seitens des Parkassistenzsystems im Kraftfahrzeug zwei, drei oder sämtliche der folgenden Parksituationstypen unterscheidbar:
1. keine erkannte Parklücke,
2. eine erkannte, beparkbare Parklücke, die von der aktuellen Fahrzeuglage aus über das Parkassistenzsystem per Fernbedienung beparkbar ist,
3. eine erkannte, beparkbare Parklücke, die von der aktuellen Fahrzeuglage aus über das Parkassistenzsystem per Fernbedienung beparkbar ist, wobei die Güte der Beparkbarkeit geringer als bei dem vorstehend genannten Parksituationstyp mit beparkbarer Parklücke ist und
4. eine erkannte Parklücke, die nicht von der aktuellen Fahrzeuglage aus über das Parkassistenzsystem per Fernbedienung beparkbar ist.

Vorzugsweise sind sämtliche Parksituationstypen unter 1. - 4. vom Parkassistenzsystem unterscheidbar.

Information über die erkannte Parksituation wird von dem Parkassistenzsystem im Fahrzeug an der Fernbedienung gesandt. Beispielsweise wird ein Byte an die Fernbedienung gesandt, dessen Wert angibt, welcher Parksituationstyp aktuell vorliegt.

Vorzugsweise sind zwei Parksituationstypen der Parksituationstypen unter 1. - 4., sämtliche Parksituationstypen der Parksituationstypen unter 1. - 4. oder nur eine Teilmenge der Parksituationstypen unter 1. - 4. durch unterschiedliche, den einzelnen Parksituationstypen zugeordnete Signale in für den Benutzer unterscheidbarer Weise über die Fernbedienung an den Benutzer signalisierbar. Beispielsweise werden vier unterschiedliche Signale (beispielsweise 4 verschiedene Piktogramme auf einem Bildschirm auf der Fernbedienung) für die Signalisierung der 4 Parksituationstypen verwendet. Alternativ wäre es aber möglich, dass die Situationen 1. und 4. mit dem gleichen Signal dem Nutzer per Fernbedienung signalisiert werden (indem beispielsweise für diese Parksituationen das gleiche Piktogramm verwendet wird).

Vorzugsweise umfasst die Fernbedienung eine optische Anzeige und das Signalisieren der Erkennung der Parklücke bzw. einer beparkbaren Parklücke an den Nutzer erfolgt über diese optische Anzeige, beispielsweise über ein oder mehrere Leuchtdioden auf der Fernbedienung. Mit Vorteil handelt es sich bei der optischen Anzeige aber um einen insbesondere matrixbasierten Bildschirm, beispielsweise einen LCD- oder OLED-Bildschirm; der Bildschirm kann als Touchscreen ausgestaltet sein. Das Signalisieren an den Benutzer erfolgt hierbei vorzugsweise über ein oder mehrere verschiedene Piktogramme.

Ein zweiter Aspekt der Erfindung ist auf das fahrzeugseitige Parkassistenzsystem gerichtet, welches über eine Fernbedienung kontrolliert wird.

Das Parkassistenzsystem ist zum Einparken in Kopfparklücken in Vorwärtsfahrt und/oder Rückwärtsfahrt geeignet. Die Fernbedienung umfasst ein Bedienmittel zur Steuerung der Vorwärtsfahrt und/oder ein Bedienmittel zur Steuerung der Rückwärtsfahrt des Kraftfahrzeugs umfasst. Das Parkassistenzsystem umfasst eine automatisierte Querführung, so dass das Fahrzeug automatisch gelenkt in die Parklücke gesteuert werden kann.

Das Parkassistenzsystem umfasst eine Umfeldsensorik zur Bestimmung von Umfeldinformation bezüglich des Fahrzeugumfelds, Parklücken-Erkennungsmittel zur Erkennung einer Parklücke basierend auf der Umfeldinformation und vorzugsweise eine bidirektionale drahtlose Kommunikationseinrichtung zum Senden von Information über das Erkennen einer Parklücke von dem Kraftfahrzeug an die Fernbedienung.

Das Parkassistenzsystem ist ferner eingerichtet, für den Fall, dass keine Parklücke erkannt wurde, bei Bedienung des Bedienmittels das Fahrzeug geradeaus ohne Lenkeinschlag in Vorwärtsrichtung bzw. Rückwärtsrichtung automatisiert zu steuern, und für den Fall, dass eine Parklücke erkannt wurde, bei Bedienung des Bedienmittels das Fahrzeug mit automatisierter Querführung gelenkt in Vorwärtsrichtung bzw. Rückwärtsrichtung in die Parklücke zu steuern.

Die vorstehenden Ausführungen zum erfindungsgemäßen Verfahren nach dem ersten Aspekt der Erfindung gelten in entsprechender Weise auch für das erfindungsgemäße fahrzeugseitige Parkassistenzsystem nach dem zweiten Aspekt der Erfindung. An dieser Stelle und in den Patentansprüchen nicht explizit beschriebene vorteilhafte Ausführungsbeispiele des erfindungsgemäßen fahrzeugseitigen Parkassistenzsystems entsprechen den vorstehend beschriebenen oder in den Patentansprüchen beschriebenen vorteilhaften Ausführungsbeispielen des erfindungsgemäßen Verfahrens.

Die Erfindung wird nachfolgend unter Zuhilfenahme auf die beigefügten Zeichnungen anhand eines Ausführungsbeispiels beschrieben. In diesen zeigen:
- Fig. 1: einen Personenkraftwagen mit einem Ausführungsbeispiel des erfindungsgemäßen Parkassistenzsystems, welches per Fernbedienung kontrollierbar ist;
- Fig. 2: ein beispielhaftes Ablaufdiagramm des erfindungsgemäßen Verfahrens;
- Fig. 3 - Fig. 6: die Bestimmung von Ankerpunkten, seitlichen Parklückenausrichtungsgeraden und der Parkgerade in verschiedenen beispielhaften Situationen; und
- Fig. 7 - Fig. 8: beispielhafte Bilddarstellungen auf einem Touchscreen der Fernbedienung.

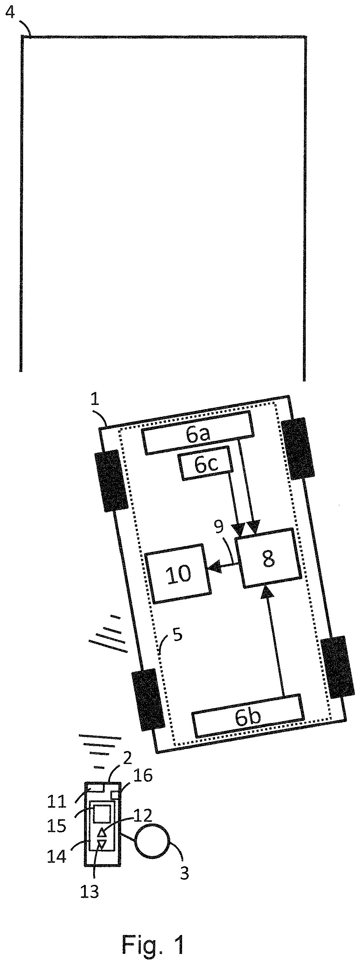

In Fig. 1 ist schematisch ein Personenkraftwagen 1 mit einem Ausführungsbeispiel des erfindungsgemäßen Parkassistenzsystems 5 dargestellt, welches per Fernbedienung 2 von einem Bediener 3 der Fernbedienung 2 kontrollierbar ist. Die Fernbedienung 2 dient vorzugsweise auch als Fahrzeugschlüssel. Das Parkassistenzsystem 5 unterstützt einen Einparkvorgang in eine Kopfparklücke 4. Bei der Kopfparklücke 4 handelt es sich beispielsweise um eine Garage. Die Kopfparklücke 4 kann durch eine physikalische Begrenzung, z. B. die Garagenmauer, andere Fahrzeug, Pflanzen, oder auch durch Bodenmarkierungen begrenzt werden. Der Parkassistent 5 umfasst beispielsweise zwei Modi: einen Einparkmodus, wobei der Parkassistent das Fahrzeug vorwärts auf den Stellplatz 4 einparkt, und einen Ausparkmodus, bei dem der Parkassistent 5 das Fahrzeug 1 rückwärts vom Stellplatz 4 ausparkt. Beide Modi besitzen vorzugsweise keine Zwangskopplung. Dementsprechend kann der Fahrer beispielsweise sein Fahrzeug 1 selbst einparken und anschließend den Ausparkvorgang mit Hilfe der beschriebenen Funktion durchführen lassen.

Da der Bediener 3 sich während des Parkmanövers nicht in dem Fahrzeug 1 aufhält und das Fahrzeug 1 nachher nicht mehr verlassen muss, kann es sich auch um einen in Bezug auf die Fahrzeugbreite enge Parklücke (beispielsweise eine enge Garage) handeln. Um das Fahrzeug 1 in der Parklücke 4 abzustellen, steigt der Fahrer 3 vor der Parklücke aus dem Fahrzeug 1 aus und startet über eine Fernbedienung 2 den automatischen Einparkvorgang. Der Parkassistent 5 übernimmt ab dann die Steuerung der Antriebs-, Brems- und Lenkfunktionen und der Getriebeschaltfunktion und manövriert das Fahrzeug in die enge Garage hinein - und auch wieder aus ihr heraus. So bleiben dem Fahrer unkomfortables Ein- und Aussteigen in engen Garagen und eventuell beschädigte Türen erspart. Zur Vereinfachung sind in Fig. 1 die automatischen Steuerfunktionen des Parkassistenzsystems 5 zur Steuerung von Antrieb, Bremse usw. sowie das Interface zu den entsprechenden Steuergeräten des Fahrzeugs 1 nicht dargestellt.

Das Parkassistenzsystem 5 umfasst vorzugsweise eine Ultraschall-Sensorik 6a an der Fahrzeugfrontseite und eine Ultraschall-Sensorik 6b am Fahrzeugheck. Vorzugsweise ist ferner noch eine Kamera-Sensorik 6c vorgesehen, die nach vorne gerichtet ist. Die Sensor-Information der Umfeld-Sensoriken 6a, 6b, 6c wird von einer Parklücken-Erkennungseinrichtung 8 weiterverarbeitet. Anhand der Sensor-Information wird in der Parklücken-Erkennungseinrichtung 8 eine Parklücke erkannt und die Parklücke als beparkbar oder nicht beparkbar qualifiziert. Information 9 über die Erkennung der Parklücke und deren Beparkbarkeit wird von einer bidirektionalen drahtlosen Kommunikationseinrichtung 10 an die bidirektionale Kommunikationseinrichtung 11 der Fernbedienung 2 gesandt, insbesondere in Form eines Funksignals. Ferner kann die bidirektionale Kommunikationseinrichtung 10 Steuersignale von der Fernbedienung 2 empfangen.

Ferner sind Bedienmittel 12-13 zur Kontrolle des Einparkvorgangs vorgesehen, vorzugsweise in Form von virtuellen Tasten auf einem Touchscreen 14; alternativ sind auch physikalischen Tasten denkbar. Bei dem Ausführungsbeispiel in Fig. 1 ist in der Fernbedienung 2 eine (hier virtuelle) Vorwärts-Taste 12 zur Kontrolle der Vorwärtsfahrt des Personenkraftwagens 1 und eine (hier virtuelle) Rückwärts-Taste 14 zur Kontrolle der Rückwärtsfahrt des Personenkraftwagens vorgesehen. Durch Betätigen und Halten der Vorwärts-Taste 12 wird das Fahrzeug 1 in Vorwärtsrichtung bewegt, bei Loslassen der Vorwärts-Taste 12 wird das Fahrzeug 1 gebremst. Durch Betätigen und Halten der Vorwärts-Taste 13 wird das Fahrzeug 1 in Rückwärtsrichtung bewegt, bei Loslassen der Rückwärts-Taste 13 wird das Fahrzeug 1 gebremst.

Ferner umfasst die Fernbedienung 2 optional eine Totmann-Taste 16, die zusätzlich vom Nutzer 3 betätigt werden muss, ansonsten wird das Fahrzeug gebremst; bei Loslassen der Totmann-Taste 16 wird vorzugsweise stärker gebremst als bei Loslassen der Vorwärts- 12 bzw. Rückwärts-Taste 13 (z.B. eine Notbremsung gegenüber einer Komfortbremsung mit geringerer Geräuschentwicklung).

Darüber hinaus umfasst die Fernbedienung 2 eine optische Anzeige der Erkennung der Parklücke und deren Beparkbarkeit. Dies wird durch entsprechende Piktogramme auf dem Touchscreen realisiert.

Nachfolgend wird der grundsätzliche Ablauf eines Einparkvorgangs beschrieben.

Zunächst hält der Fahrer vor der Kopfparklücke an und stellt den Motor ab und legt die P-Getriebestufe ein. Der Fahrer steigt aus, positioniert sich hinter dem Fahrzeug 1 und aktiviert die Parkfunktion über die Fernbedienung 2. Bei gedrückter Totmann-Taste 16 wird der Antriebsmotor gestartet. Zur Signalisierung der Fahrbereitschaft des Fahrzeugs werden das Fahrlicht, insbesondere das Rücklicht des Fahrzeugs, automatisch eingeschaltet und die Außenspiegel automatisch geklappt, beispielsweise angeklappt und wieder abgeklappt (sofern die Außenspiegel vorher abgeklappt waren) oder abgekappt (sofern der Außenspiegel vorher angeklappt waren).

Sofern der Fahrer bei weiterhin betätigter Totmann-Taste 16 die Vorwärts-Taste 12 betätigt, wird die Getriebestufe D eingelegt und das Fahrzeug bewegt sich mit einer vom Längsregler vorgegebenen Soll-Geschwindigkeit (z. B. 2 km/h) in Richtung der Parklücke 4. Sofern vom System eine beparkbare Parklücke erkannt wurde, wird das Fahrzeug dabei auch automatisch gelenkt.

Ein Richtungswechsel ist jederzeit möglich; hierzu muss bei Vorwärtsfahrt die Rückwärts-Taste 13 betätigt werden. Für einen erneuten Richtungswechsel muss dann wieder die Vorwärts-Taste 12 betätigt werden.

Zum Beenden des Einparkvorgangs kann die Vorwärts-Taste 12 oder die Totmann-Taste 16 losgelassen werden. Das Fahrzeug hält dann in der Parklücke an, schaltet die Getriebestufe von D auf P um, zieht die elektrische Parkbremse an und stoppt den Motor.

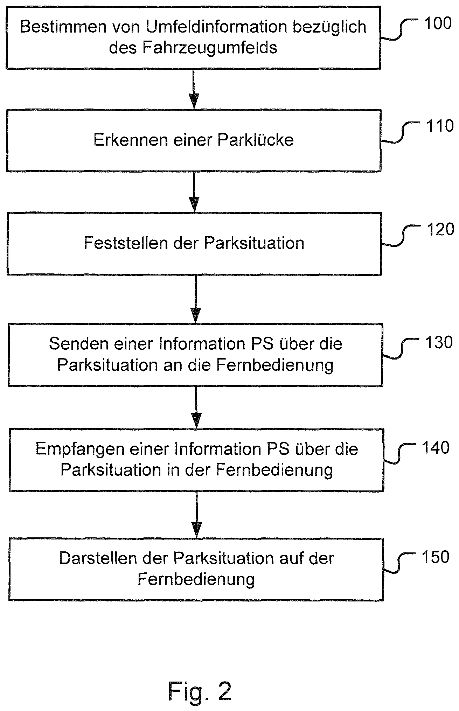

In Fig. 2 ist ein beispielhaftes Ablaufdiagramm für die Signalisierung der Erkennung einer Parklücke und deren Beparkbarkeit über die Fernbedienung 2 an den Nutzer 3 dargestellt.

In Schritt 100 wird Umfeldinformation bezüglich des Fahrzeugumfelds mittels der Umfeld-Sensorik 6a, 6b, 6c ermittelt. Dies geschieht bereits beim Zufahren auf die Parklücke 4 bis zum Abstellen des Fahrzeugs 1 vor der Parklücke 4, sofern eine Grenzgeschwindigkeit von beispielsweise 10 km/h unterschritten wird, und vorzugsweise auch danach beim automatisierten Parkvorgang. Es werden hierzu mittels der Umfeld-Sensorik 6a, 6b, 6c die Lage von Objekten, beispielsweise die Lage von seitlichen Begrenzungen einer Parklücke wie Fahrzeugen, seitliche Wände einer Garage oder auf dem Boden aufgebrachten Markierungen, bestimmt und diese Objekte in einer Umfeldkarte des Fahrzeugumfelds eingetragen.

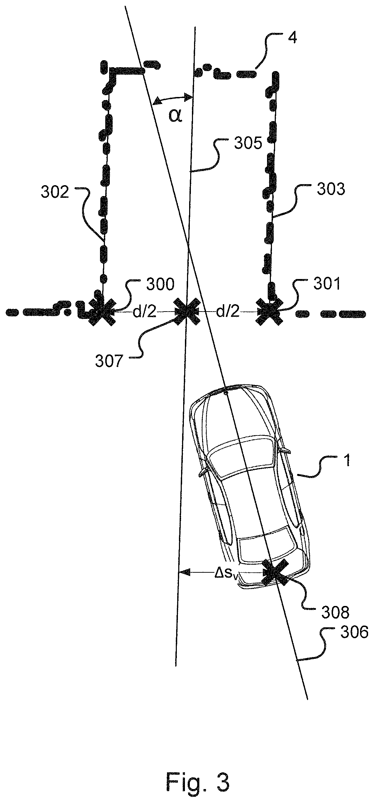

In Schritt 110 erkennt das Kraftfahrzeug 1 basierend auf der Umfeldinformation eine Parklücke. Beispielsweise werden im Rahmen der Erkennung einer Parklücke ein linker und einer rechter Ankerpunkt (typischerweise die beiden Eckpunkte des Eingangs) bestimmt, welche den Eingang der Parklücke kennzeichnen. In Fig. 3 sind ein beispielhafter linker Ankerpunkt 300 und ein beispielhafter rechter Ankerpunkt 301 in einer Umfeldkarte mit den erkannten Objekten dargestellt. Ein Ankerpunkt liegt im Idealfall auf einer seitlichen Parklückenausrichtungsgerade (im Fall des Ankerpunkts 300 die Parklückenausrichtungsgerade 301 und im Fall des Ankerpunkts 301). Die seitlichen Parklückenausrichtungsgeraden 302, 303 werden aus den detektierten Objekten (physikalische Objekte wie Fahrzeug oder Wände oder eine Markierung auf der Bodenfläche) der Begrenzung der Parklücke 4 bestimmt. Eine Parklücke gilt vorzugsweise dann als erkannt, wenn mindestens ein Ankerpunkt und eine seitliche Parklückenausrichtungsgerade auf der gleichen Seite der Parklücke 4 oder ein zweiter Ankerpunkt auf der anderen Seite gefunden werden.

Ferner wird eine Parkgerade 305 bestimmt. Die Parkgerade 305 dient zur Berechnung des Eingangssignals des Querreglers der Querführung. Die Parkgerade 305 hat vorzugsweise keine definierte Länge und ist vorzugsweise unendlich lang.

Wenn eine rechte Parklückenausrichtungsgerade 301 und eine linke Parklückenausrichtungsgerade 302 gefunden werden konnten, entspricht die Ausrichtung der Parkgerade 305 dem Mittelwert (z. B. 15° in Bezug auf die Fahrzeuglängsachse 306) aus der Ausrichtung (z. B. 10° in Bezug auf die Fahrzeuglängsachse 306) der seitlichen Parklückenausrichtungsgerade 302 und der Ausrichtung (z. B. 20° in Bezug auf die Fahrzeuglängsachse 306) der anderen seitlichen Parklückenausrichtungsgerade 303.

Die Parkgerade wird so positioniert, dass die Abstände der beiden Ankerpunkte 300,301 zur Parkgerade 305 im Wesentlichen identisch sind.

Es wird vorzugsweise ein Drehpunkt 307 bestimmt, um die Position der Parkgerade 305 festzulegen. Die Position der Parkgerade 305 wird durch den Drehpunkt 307 definiert, durch den die Parkgerade 305 laufen muss und der mittig zwischen den beiden Ankerpunkten 301, 302 angeordnet ist, und zwar vorzugsweise in der Weise dass die Längen d/2 der beiden Lote der beiden Ankerpunkte 300, 301 auf die Parkgerade 305 identisch sind.

Wenn keine Parklücke erkannt werden kann (weil beispielsweise nur ein einziger Ankerpunkt 301, 302 ohne zugehöriger seitlicher Parklückenausrichtungsgerade gefunden werden kann), wird die Parkgerade 305 identisch der Fahrzeuglängsachse 306 gewählt, so dass das Fahrzeug entlang der Fahrzeuglängsachse geradeaus bewegt wird.

Wenn nur eine einzige seitliche Parkausrichtungslinie 302, 303 und zumindest der zugehörige Ankerpunkt 300, 301 auf der gleichen Seite bestimmt werden können, so entspricht die Ausrichtung der Parkgeraden 305 der Ausrichtung der einen Parkausrichtungslinie 302, 303.

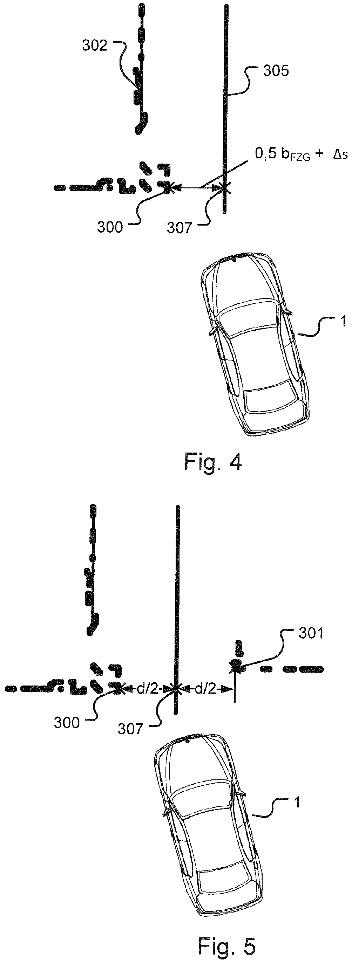

Wenn in diesem Fall nur ein einziger Ankerpunkt 300, 301 gefunden werden kann oder wenn die Parklückenbreite größer als ein Schwellwert bₘₐₓ für die Parklückenbreite ist, wird die Parkausrichtungslinie 302, 303 in einem bestimmten Abstand von dem Ankerpunkt positioniert, beispielsweise im Abstand der halben Fahrzeugbreit b_{FZG} plus einem Sicherheitsabstand Δs (z. B. Δs = 0,45 m). Der Drehpunkt 307 wird beispielsweise daher wie folgt berechnet: Das Lot des Drehpunktes 307 auf der Parkausrichtungslinie 302, 303 muss durch den Ankerpunkt 300, 301 der zugehörigen Parkausrichtungslinie 302, 303 verlaufen. Der Abstand des Drehpunktes 307 zu diesem Ankerpunkt 300, 301 entspricht dabei beispielsweise der halben Fahrzeugbreite b_{FZG} plus einem Sicherheitsabstand Δs (z. B. Δs = 0,45 m). Dies ist beispielhaft in Fig. 4 dargestellt.

Können zwei Ankerpunkte 300, 301 und nur eine einzige seitliche Parkausrichtungslinie 302, 303 gefunden werden und der Abstand der Ankerpunkte 300, 301 ist kleiner gleich der maximalen Parklückenbreite bₘₐₓ, bestimmt sich der Drehpunkt 307 in folgender Weise: Die Parkgerade 305 muss so positioniert werden, dass die Längen der Lote der Ankerpunkte 300, 301 zur Parkgeraden 305 im Wesentlichen gleich sind. Dies ist beispielhaft in Fig. 5 dargestellt.

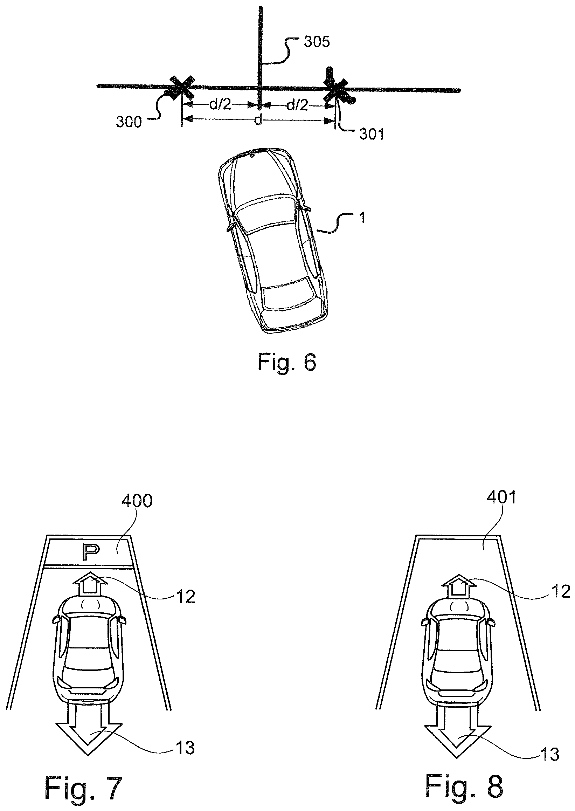

Können zwei Ankerpunkte 300, 301 mit einem Abstand größer der minimalen Parklückenbreite bₘᵢₙ (z. B. 2,60m) und kleiner der maximalen Parklückenbreite bₘₐₓ (z. B. 3,50m), aber keine seitliche Parklückenausrichtungsgerade gefunden werden, dann wird die Parkgerade 305 in ihrer Ausrichtung als Orthogonale auf der Geraden, die durch die beiden Ankerpunkte 300, 301 geht, definiert, wobei die Parkgerade 305 durch den Mittelpunkt der Gerade zwischen beiden Ankerpunkten 300, 301 geht. Dies ist beispielhaft in Fig. 6 dargestellt.

Wenn der Abstand zwischen zwei Ankerpunkten kleiner der minimalen Parklückenbreite bₘᵢₙ ist, wird die Parkgerade 305 gemäß der Fahrzeuglängsachse 306 definiert, so dass das Fahrzeug 1 geradeaus fährt.

In Schritt 120 in Fig. 2 wird nach der Erkennung der Parklücke anhand mehrerer Kriterien die aktuelle Parksituation aus einer Mehrzahl möglicher Parksituationstypen ermittelt. Die möglichen Parksituationstypen sind beispielsweise:
1. keine erkannte Parklücke,
2. eine erkannte, beparkbare Parklücke, die von der aktuellen Fahrzeuglage aus über das Parkassistenzsystem per Fernbedienung beparkbar ist,
3. eine erkannte, beparkbare Parklücke, die von der aktuellen Fahrzeuglage aus über das Parkassistenzsystem per Fernbedienung beparkbar ist, wobei die Güte der Beparkbarkeit geringer als bei dem vorstehend genannten 3. Parksituationstyp ist, und
4. eine erkannte Parklücke, die nicht von der aktuellen Fahrzeuglage aus über das Parkassistenzsystem per Fernbedienung beparkbar ist.

Hierzu wird insbesondere festgestellt, ob die ggf. erkannte Parklücke 4 beparkbar ist. Zur Prüfung der Beparkbarkeit wird der Winkel α zwischen der Ausrichtung der Fahrzeuglängsachse 306 und der Ausrichtung der Parkgerade 305 bestimmt (s. Fig. 3). Ferner wird der laterale Versatz Δsᵥ des Fahrzeugs 1 gegenüber der Parklücke 4 bestimmt. Der laterale Versatz Δsᵥ entspricht beispielsweise der Länge des Lots des Fahrzeugreferenzpunkts (beispielsweise Mitte der Hinterachse) auf die Parkgerade 305, wie beispielhaft in Fig. 3 dargestellt. Ferner wird die Breite b der Parklücke 4 bestimmt, beispielsweise als Abstand der beiden Ankerpunkte 301, 302. Darüber hinaus wird der Abstand a zwischen dem Fahrzeug und der Parklücke bestimmt, beispielsweise als Abstand a zwischen einem Fahrzeugreferenzpunkts (die Mitte 308 der Hinterachse) und einem Referenzpunkt der Parklücke (z. B. der Drehpunkt).

Der 1. Parksituationstyp mit nicht erkannter Parklücke liegt vor, wenn nicht mindestens ein Ankerpunkt und eine seitliche Parklückenausrichtungsgerade auf der gleichen Seite oder ein zweiter Ankerpunkt auf der anderen Seite gefunden werden.

Der 2. Parksituationstyp mit beparkbarer Parklücke liegt vor, wenn die folgenden Bedingungen kumulativ erfüllt sind:
- der Betrag des Winkels α ist kleiner gleich einem Schwellwert α,_{TH,1} (z. B. α,_{TH,1} = 10°),
- der Betrag des lateralen Versatzes Δsᵥ ist kleiner gleich einem Schwellwert ΔS_{v,TH,1} (z. B. Δs_{v,TH,1} = 1 m),
- die Breite b der Parklücke ist größer gleich der Mindestbreite bₘᵢₙ und
- der Abstand a ist kleiner gleich einem Schwellwert aₘₐₓ.

Das Vorliegen des 3. Parksituationtyps mit beparkbarer Parklücke mit geringer Güte der Beparkbarkeit wird festgestellt, wenn die folgenden Bedingungen kumulativ erfüllt sind:
- der Betrag des Winkels α ist kleiner gleich einem Schwellwert α_{,TH,2} > α_{,TH,1} (z. B. α_{,TH,2} = 30°),
- der Betrag des lateralen Versatzes Δsᵥ ist kleiner gleich einem Schwellwert Δs_{v,TH,2} > Δs_{v,TH,1} (z. B. Δs_{v,TH,2} = 1,5 m),
- die Breite b der Parklücke ist größer gleich der Mindestbreite bₘᵢₙ und
- der Abstand a ist kleiner gleich einem Schwellwert aₘₐₓ.

Das Vorliegen des 4. Parksituationstyps mit erkannter, aber nicht beparkbarer Parklücke wird festgestellt, wenn eine der folgenden Bedingungen erfüllt ist:
- der Betrag des Winkels α ist größer als der Schwellwert α_{,TH,2} (z. B. α_{,TH,2} = 30°),
- der Betrag des lateralen Versatzes Δsᵥ ist größer als der Schwellwert Δs_{v,TH,2} (z. B. Δs_{v,TH,2} = 1,5 m),
- die Breite b der Parklücke ist kleiner als die Mindestbreite bₘᵢₙ oder
- der Abstand a ist größer als der Schwellwert aₘₐₓ.

Statt der vorstehend beschriebenen 4 Kriterien kann in einer alternativen Ausführungsform nur eine Teilmenge dieser 4 Kriterien geprüft werden.

Die Information PS über den aktuell vorliegenden Parksituationstyp wird in Schritt 130 von dem Fahrzeug an die Fernbedienung 2 gesandt. Bei der Information PS über den aktuell vorliegenden Parksituationstyp handelt es sich beispielsweise um ein Byte, dessen Wert den aktuell vorliegenden Parksituationstyp beschreibt.

Die Information PS über den aktuell vorliegenden Parksituationstyp wird in Schritt 140 von der Fernbedienung 2 empfangen.

Basierend auf der Information PS über den aktuell vorliegenden Parksituationstyp wird ein der Information PS zugeordnetes Piktogramm auf dem Bildschirm 14 dargestellt (s. Schritt 150).

Sofern gemäß der Information PS die 2. Parksituation mit beparkbarer Parklücke vorliegt, wird auf dem Touchscreen 14 beispielsweise das in Fig. 7 gezeigte Bild mit den virtuellen Bedientasten 12 und 13 für die Vorwärtsrichtung bzw. die Rückwärtsrichtung dargestellt. Die beparkbare erkannte Parklücke gemäß dem 2. Parksituationstyp ist als Piktogramm 400 dargestellt.

Sofern gemäß der Information PS die 3. Parksituation mit beparkbarer Parklücke, jedoch geringerer Güte der Beparkbarkeit, vorliegt, wird auf dem Touchscreen 14 beispielsweise das in Fig. 7 gezeigte Bild dargestellt, wobei das dargestellte Piktogramm zur Unterscheidbarkeit für den Nutzer eine anderen Farbe als im Fall der 2. Parksituation aufweist (z. B. grün im Fall der 2. Parksituation und blau im Fall der 3. Parksituation).

Sofern gemäß der Information PS die 1. Parksituation (nicht erkannte Parklücke) oder die 4. Parksituation (erkannte Parklücke, aber nicht beparkbar) vorliegt, wird das in Fig. 8 dargestellte Bild auf dem Touchscreen dargestellt, wobei im Piktogramm 401 keine Parklücke hervorgehoben ist, und stattdessen der Fahrweg ohne Parklücke weitergeführt ist.

Die Parksituation, die im fahrzeugseitigen Parkassistenzsystem bestimmt wird, und die Signalisierung der Parksituation auf der Fernbedienung kann während des Parkmanövers laufend aktualisiert werden, wenn sich die Umstände ändern. Beispielsweise kann sich die Parksituation von der 3. Parksituation in die 2. Parksituation oder von der ersten Parksituation 1. in die 2., 3. oder 4. Parksituation ändern. Die Änderung wird dann entsprechend dem Nutzer auf dem Bildschirm mitgeteilt.

In diesem Ausführungsbeispiel kann nur in den Parksituationen 2. und 3. das Fahrzeug mit automatisierter Querführung gelenkt in die Parklücke gesteuert werden, wobei die Längsachse 306 des Kraftfahrzeugs 1 im Rahmen der Querführung auf die Parkgerade 305 gesteuert oder geregelt wird.

Hierzu werden beispielsweise laufend während des Einparkmanövers der aktuelle Ist-Winkel α zwischen der aktuellen Ausrichtung der Fahrzeuglängsachse 306 und der Parkgerade 305 und der aktuelle Ist-Versatz Δs_{V} zwischen dem Fahrzeug 1 und der Parkgerade 305 bestimmt. Diese Größen a, Δs_{V} dienen dem Querregler der Querführung als Eingangsgrößen. Der Querregler versucht, den Ist-Winkel α und den Ist-Versatz Δs_{V} auf null zu bringen, so dass das Fahrzeug auf die Parkgerade 305 geführt wird.

In den Parksituationen 1. und 4. wird die Parkgerade 305 entsprechend der Fahrzeuglängsachse 306 gewählt, so dass keine Abweichung a, Δs_{V} vorliegt und das Fahrzeug 1 geradeaus fährt.

## Patentansprüche

1. Verfahren zum Steuern eines Kraftfahrzeugs mittels eines per Fernbedienung (2) von außerhalb eines Kraftfahrzeugs (1) von dem Bediener (3) der Fernbedienung kontrollierbaren Parkassistenzsystems (5) zum automatisierten Einparken des Kraftfahrzeugs (1) in eine Parklücke (4), wobei
- das Parkassistenzsystem (5) zum Einparken in Kopfparklücken in Vorwärtsfahrt und/oder Rückwärtsfahrt geeignet ist,
- die Fernbedienung (2) ein Bedienmittel (12) zur Steuerung der Vorwärtsfahrt und/oder ein Bedienmittel (13) zur Steuerung der Rückwärtsfahrt des Kraftfahrzeugs umfasst, und
- das Parkassistenzsystem (5) eine automatisierte Querführung umfasst, um das Fahrzeug (1) automatisch gelenkt in die Parklücke (4) zu steuern,
wobei das Verfahren die folgenden Schritte umfasst:
- seitens des Kraftfahrzeugs, Bestimmen (100) von Umfeldinformation bezüglich des Fahrzeugumfelds mittels einer vom Fahrzeug umfassten Umfeld-Sensorik (6a, 6b, 6c); und
- seitens des Kraftfahrzeugs, Erkennen (110) einer Parklücke (4) basierend auf der Umfeldinformation und - sofern eine Parklücke erkannt wurde - bei Bedienung des Bedienmittels (12, 13) automatisiertes Steuern des Fahrzeugs mit automatisierter Querführung gelenkt in Vorwärtsrichtung bzw. Rückwärtsrichtung in die Parklücke (4); und
- für den Fall, dass keine Parklücke erkannt wurde, bei Bedienung des Bedienmittels (12, 13) automatisiertes Steuern des Fahrzeugs geradeaus ohne Lenkeinschlag in Vorwärtsrichtung bzw. Rückwärtsrichtung.

2. Verfahren nach Anspruch 1, wobei das Verfahren zusätzlich die folgenden Schritte umfasst:
- Senden (130) von Information über das Erkennen einer Parklücke von dem Kraftfahrzeug (1) an die Fernbedienung (2) über eine drahtlose Kommunikationsverbindung;
- seitens der Fernbedienung (2), Empfangen (140) der Information über das Erkennen einer Parklücke (4); und
- seitens der Fernbedienung (2), basierend auf der empfangenen Information Signalisieren (150) des Vorliegens einer erkannten Parklücke an den Bediener (3) der Fernbedienung (2).

3. Verfahren nach Anspruch 2, wobei
- seitens des Kraftfahrzeugs (1) anhand eines oder mehrerer Kriterien hinsichtlich der Beparkbarkeit festgestellt wird, dass die Parklücke (4) von der aktuellen Fahrzeuglage aus über das Parkassistenzsystem (5) per Fernbedienung (2) beparkbar ist,
- seitens des Kraftfahrzeugs (1) Information über das Erkennen einer beparkbaren Parklücke (4) an die Fernbedienung (2) gesendet wird,
- seitens der Fernbedienung (2) die Information über das Erkennen einer beparkbaren Parklücke (4) empfangen wird; und
- seitens der Fernbedienung (2) das Vorliegen einer erkannten, von der aktuellen Fahrzeuglage aus über das Parkassistenzsystem (5) per Fernbedienung (2) beparkbare Parklücke an den Bediener (3) der Fernbedienung (2) signalisiert wird.

4. Verfahren nach Anspruch 3, wobei
- das eine oder die mehreren Kriterien hinsichtlich der Beparkbarkeit der Parklücke betreffen:
- die Ausrichtung des Fahrzeugs gegenüber der Parklücke,
- der seitliche Versatz (Δs_{V}) des Fahrzeugs gegenüber der Parklücke,
- die Breite der Parklücke und
- der Abstand des Fahrzeugs zur Parklücke.

5. Verfahren nach einem der Ansprüche 3 bis 4, wobei
- seitens der Kraftfahrzeugs (1) mindestens zwei verschiedene Parksituationstypen mit beparkbarer Parklücke mit unterschiedliche Güte der Beparkbarkeit der Parklücke unterscheidbar sind;
- im Fall des Feststellens einer Parksituation mit beparkbaren Parklücke mit höherer Güte der Beparkbarkeit der Parklücke eine Information über das Vorliegen einer derartigen Parksituation an die Fernbedienung (2) gesendet wird, und nach Empfang dieser Information seitens der Fernbedienung (2) das Vorliegen einer beparkbaren Parklücke mit höherer Güte der Beparkbarkeit dem Bediener (3) der Fernbedienung (2) signalisiert wird; und
- im Fall des Feststellens einer Parksituation mit beparkbaren Parklücke mit im Vergleich dazu geringerer Güte der Beparkbarkeit der Parklücke eine Information über das Vorliegen einer derartigen Parksituation an die Fernbedienung (2) gesendet wird, und nach Empfang dieser Information seitens der Fernbedienung (2) das Vorliegen einer beparkbaren Parklücke mit geringerer Güte der Beparkbarkeit dem Bediener (3) der Fernbedienung (2) signalisiert wird.

6. Verfahren nach einem der Ansprüche 2 bis 5, wobei seitens des Kraftfahrzeugs (1) zwei, drei oder sämtliche der folgenden Parksituationstypen unterscheidbar sind:
- keine erkannte Parklücke,
- eine erkannte, beparkbare Parklücke, die von der aktuellen Fahrzeuglage aus über das Parkassistenzsystem per Fernbedienung beparkbar ist,
- eine erkannte, beparkbare Parklücke, die von der aktuellen Fahrzeuglage aus über das Parkassistenzsystem (5) per Fernbedienung (2) beparkbar ist, wobei die Güte der Beparkbarkeit geringer als bei dem vorstehend genannten Parksituationstyp mit beparkbarer Parklücke ist, und
- eine erkannte Parklücke, die nicht von der aktuellen Fahrzeuglage aus über das Parkassistenzsystem (5) per Fernbedienung (2) beparkbar ist.

7. Verfahren nach Anspruch 6, wobei mindestens zwei Parksituationstypen nach Anspruch 6 durch unterschiedliche, den einzelnen Parksituationstypen zugeordnete Signale in für den Benutzer (3) unterscheidbarer Weise signalisierbar sind, insbesondere im Fall eines von der Fernbedienung (2) umfassten Bildschirms (14) durch unterschiedliche, den einzelnen Parksituationstypen zugeordnete Piktogramme (400, 401).

8. Verfahren nach einem der vorhergehenden Ansprüche, wobei dem Bediener (3) seitens der Fernbedienung (2) signalisiert wird, ob das Fahrzeug geradeaus (1) ohne Lenkeinschlag in die Parklücke (4) gesteuert wird oder das Fahrzeug (1) mit automatisierter Querführung gelenkt in die Parklücke (4) gesteuert wird.

9. Verfahren nach einem der vorhergehenden Ansprüche, wobei
- bei erkannter Parklücke basierend auf der Umfeldinformation eine Parkgerade (305) in Längsrichtung der Parklücke (4) bestimmt wird und
- im Rahmen des Einparkmanövers das Fahrzeug mit automatisierter Querführung gelenkt in Vorwärtsrichtung bzw. Rückwärtsrichtung in die Parklücke (4) gesteuert wird, wobei die Längsachse (306) des Kraftfahrzeugs auf die Parkgerade (305) eingestellt, insbesondere geregelt, wird.

10. Verfahren nach Anspruch 9 und Anspruch 4, wobei
- das die Ausrichtung des Fahrzeugs (1) gegenüber der Parklücke (4) betreffende Kriterium basierend auf der Ausrichtung der Fahrzeuglängsachse (306) und der Ausrichtung der Parkgerade (305) geprüft wird; und/oder
- das den seitlichen Versatz des Fahrzeugs gegenüber der Parklücke betreffende Kriterium basierend auf der Länge des Lots eines Fahrzeugreferenzpunkts (308), insbesondere der Mitte der Hinterachse, auf die Parkgerade (305) geprüft wird.

11. Verfahren nach einem der Ansprüche 2 bis 7, wobei
- die Fernbedienung (2) eine optische Anzeige (14) umfasst, und
- das Signalisieren an den Bediener (3) der Fernbedienung über (2) die optische Anzeige (14) erfolgt.

12. Verfahren nach Anspruch 11, wobei
- die Fernbedienung als optische Anzeige einen Bildschirm (14) umfasst und
- das Signalisieren an den Bediener (3) der Fernbedienung (2) über den Bildschirm (14) erfolgt, insbesondere in Form eines auf dem Bildschirm dargestellten Piktogramms (400, 401).

13. Per Fernbedienung (2) von außerhalb eines Kraftfahrzeugs (1) kontrollierbares fahrzeugseitiges Parkassistenzsystem (5) zum automatisierten Einparken des Kraftfahrzeugs (1) in eine Parklücke (4), wobei
- das Parkassistenzsystem (5) zum Einparken in Kopfparklücken in Vorwärtsfahrt und/oder Rückwärtsfahrt geeignet ist,
- die Fernbedienung (2) ein Bedienmittel (12) zur Steuerung der Vorwärtsfahrt und/oder ein Bedienmittel (13) zur Steuerung der Rückwärtsfahrt des Kraftfahrzeugs umfasst, und
- das Parkassistenzsystem (5) eine automatisierte Querführung umfasst, um das Fahrzeug (1) automatisch gelenkt in die Parklücke (4) zu steuern, und
wobei das fahrzeugseitige Parkassistenzsystem ferner umfasst:
- eine Umfeldsensorik (6a, 6b, 6c) zur Bestimmung von Umfeldinformation bezüglich des Fahrzeugumfelds, und
- Parklücken-Erkennungsmittel (8) zur Erkennung einer Parklücke (4) basierend auf der Umfeldinformation, und
wobei das Parkassistenzsystem ferner eingerichtet ist,
- für den Fall, dass keine Parklücke erkannt wurde, bei Bedienung des Bedienmittels (12, 13) das Fahrzeug geradeaus ohne Lenkeinschlag in Vorwärtsrichtung bzw. Rückwärtsrichtung automatisiert zu steuern, und
- für den Fall, dass eine Parklücke erkannt wurde, bei Bedienung des Bedienmittels (12, 13) das Fahrzeug mit automatisierter Querführung gelenkt in Vorwärtsrichtung bzw. Rückwärtsrichtung in die Parklücke (4) zu steuern.

14. Parkassistenzsystem nach Anspruch 13, wobei das Parkassistenzsystem ferner umfasst:
- eine bidirektionale drahtlose Kommunikationseinrichtung (10) zum Senden von Information über das Erkennen einer Parklücke (4) von dem Kraftfahrzeug (1) an die Fernbedienung (2).

## Claims

1. A method for controlling a motor vehicle by means of a parking assistance system (5), which can be controlled by remote control (2) from outside a motor vehicle (1) by the operator (3) of the remote control, for parking the motor vehicle (1) into a parking space (4) in an automated fashion, wherein
- the parking assistance system (5) is suitable for parking in perpendicular parking spaces in forward travel and/or in reverse travel,
- the remote control (2) comprises a control means (12) for controlling the forward travel and/or a control means (13) for controlling the reverse travel of the motor vehicle, and
- the parking assistance system (5) comprises automated transverse guidance such that the vehicle (1) is steered into the parking space (4) in an automatically directed manner,
wherein the method comprises the following steps:
- surroundings information with respect to the vehicle surroundings is ascertained (100) by the motor vehicle by means of a surroundings sensor system (6a, 6b, 6c) comprised by the vehicle; and
- a parking space (4) is detected (110) by the motor vehicle on the basis of the surroundings information and - if a parking space has been detected - operation of the control means (12, 13) prompts the vehicle to be steered in an automated fashion into the parking space (4) in a forward or reverse direction in a directed manner using automated transverse guidance; and,
- if no parking space has been detected, operation of the control means (12, 13) prompts the vehicle to be steered straight on in automated fashion in the forward or reverse direction without turning of the steering wheel.

2. A method according to claim 1, wherein the method additionally comprises the following steps:
- transmission (130) of information regarding the detection of a parking space from the motor vehicle (1) to the remote control (2) via a wireless communication connection;
- receipt (140) of the information regarding the detection of a parking space (4) on the remote control side (2); and
- on the basis of the received information, signalling (150) on the remote control side (2) of the presence of a detected parking space to the operator (3) of the remote control (2).

3. A method according to claim 2, wherein
- the motor vehicle (1) uses one or more criteria regarding the feasibility for parking in the parking space in order to ascertain that the parking space (4) can be parked in from the current vehicle position by remote control (2) using the parking assistance system (5),
- the motor vehicle (1) sends information regarding the detection of a parking space (4) able to be parked in to the remote control (2),
- the remote control (2) receives the information regarding the detection of a parking space (4) able to be parked in; and
- the remote control (2) signals to the operator (3) of the remote control (2) the presence of a detected parking space able to be parked in from the current vehicle position by remote control (2) using the parking assistance system (5).

4. A method according to claim 3, wherein
- the one or more criteria regarding the feasibility for parking in the parking space relate to:
- the orientation of the vehicle with respect to the parking space,
- the lateral offset (Δs_{V}) of the vehicle with respect to the parking space,
- the width of the parking space, and
- the distance of the vehicle from the parking space.

5. A method according to one of claims 3 to 4, wherein
- the motor vehicle (1) can distinguish between at least two different parking situation types having a parking space that can be parked in with a different quality factor for feasibility of parking in the parking space;
- when a parking situation with a parking space that can be parked in is determined that has a higher quality factor for the feasibility of parking in the parking space, information regarding the presence of such a parking situation is sent to the remote control (2), and, after receipt of this information by the remote control (2), the presence of a parking space that can be parked in with higher quality factor for the feasibility of parking in the parking space is signalled to the operator (3) of the remote control (2); and
- when a parking situation with a parking space that can be parked in is determined that has a lower quality factor for the feasibility of parking in the parking space, information regarding the presence of such a parking situation is sent to the remote control (2), and, after receipt of this information by the remote control (2), the presence of a parking space that can be parked in with lower quality factor for the feasibility of parking in the parking space is signalled to the operator (3) of the remote control (2).

6. A method according to any one of claims 2 to 5, wherein the motor vehicle (1) can distinguish between two, three or all of the following parking situation types:
- no identified parking space,
- an identified parking space that can be parked in and that can be parked in from the current vehicle position by remote control using the parking assistance system,
- an identified parking space that can be parked in and that can be parked in from the current vehicle position by remote control (2) using the parking assistance system (5), wherein the quality factor of the feasibility of parking in the parking space is lower than in the case of the above-mentioned parking situation type with parking space that can be parked in, and
- an identified parking space that cannot be parked in from the current vehicle position by remote control (2) using the parking assistance system (5).

7. A method according to claim 6, wherein at least two parking situation types according to claim 6 can be signalled in a manner distinguishable for the operator (3) by different signals associated with the individual parking situation types, more especially by different pictograms (400, 401) associated with the individual parking situation types in the case of a screen (14) comprised by the remote control (2).

8. A method according to any one of the preceding claims, wherein the remote control (2) signals to the operator (3) whether the vehicle is steered into the parking space (4) straight on (1) without turning of the steering wheel or the vehicle (1) is steered into the parking space (4) in a directed manner using automated transverse guidance.

9. A method according to any one of the preceding claims, wherein
- when a parking space has been detected, the surroundings information is taken as a basis for ascertaining a parking line (305) in the longitudinal direction of the parking space (4), and
- during a parking manoeuvre, the vehicle is steered in automated fashion into the parking space (4) in a forward direction or reverse direction in a directed manner using automated transverse guidance, wherein the longitudinal axis (306) of the motor vehicle is set, more especially adjusted, to the parking line (305).

10. A method according to claim 9 and claim 4, wherein
- the criterion relating to the orientation of the vehicle (1) with respect to the parking space (4) is checked based on the orientation of the vehicle longitudinal axis (306) and the orientation of the parking line (305); and/or
- the criterion relating to the lateral offset of the vehicle with respect to the parking space is checked based on the length of the perpendicular of a vehicle reference point (308), more especially the middle of the rear axle, to the parking line (305).

11. A method according to any one of claims 2 to 7, wherein
- the remote control (2) comprises a visual display (14), and
- the signalling to the operator (3) of the remote control (2) is effected via the visual display (14).

12. A method according to claim 11, wherein
- the remote control comprises a screen (14) as the visual display, and
- the signalling to the operator (3) of the remote control (2) is effected via the screen (14), more especially in the form of a pictogram (400, 401) depicted on the screen.

13. A parking assistance system (5) in a motor vehicle (1), which parking assistance system can be controlled by remote control (2) from outside the motor vehicle, for parking the motor vehicle (1) in a parking space (4) in an automated fashion, wherein
- the parking assistance system (5) is suitable for parking in perpendicular parking spaces with forward travel and/or reverse travel,
- the remote control (2) comprises a control means (12) for controlling the forward travel and/or a control means (13) for controlling the reverse travel of the motor vehicle, and
- the parking assistance system (5) comprises automated transverse guidance such that the vehicle (1) is steered into the parking space (4) in an automatically directed fashion, and
wherein the parking assistance system on the vehicle side also comprises:
- a surroundings sensor system (6a, 6b, 6c) for ascertaining surroundings information with respect to the vehicle surroundings, and
- parking space detection means (8) for detecting a parking space (4) on the basis of the surroundings information, and
wherein the parking assistance system is also designed such that
- if no parking space has been detected, operation of the control means (12, 13) prompts the vehicle to be steered straight on in automated fashion in the forward or reverse direction without turning of the steering wheel, and
- if a parking space has been detected, operation of the control means (12, 13) prompts the vehicle to be steered in an automated fashion into the parking space (4) in a forward direction or reverse direction in a directed manner using automated transverse guidance.

14. A parking assistance system according to claim 13, wherein the parking assistance system also comprises:
- a bidirectional wireless communication device (10) for sending information regarding the detection of a parking space (4) from the motor vehicle (1) to the remote control (2).

## Revendications

1. Procédé de commande d'un véhicule au moyen d'un système d'assistance au stationnement (5) permettant de garer de façon automatisée le véhicule (1) dans un emplacement de stationnement (4) pouvant être contrôlé par télécommande (2) à partir de l'extérieur d'un véhicule (1) par l'opérateur (3) de cette télécommande, selon lequel
- le système d'assistance au stationnement (5) est adapté pour permettre de garer le véhicule dans des emplacements de stationnement en épi en marche avant ou en marche arrière,
- la télécommande (2) comporte des moyens d'actionnement (12) permettant de commander le déplacement en marche avant et/ou des moyens d'actionnement (13) permettant de commander le déplacement en marche arrière du véhicule, et
- le système d'assistance au stationnement (5) comporte un guidage transversal automatisé pour permettre de commander le véhicule (1) en le dirigeant automatiquement dans l'emplacement de stationnement (4),
le procédé comprenant les étapes suivantes consistant à :
- du côté du véhicule déterminer (100) des informations d'environnement concernant l'environnement du véhicule au moyen d'un système de capteurs d'environnement équipant le véhicule (6a, 6b, 6c), et
- du côté du véhicule reconnaître (110) un emplacement de stationnement (4) sur le fondement de l'information d'environnement, et - dans la mesure où un emplacement de stationnement a été reconnu - en actionnant les moyens d'actionnement (12, 13) commander automatiquement le véhicule en marche avant ou en marche arrière dans l'emplacement de stationnement (4) en étant dirigé par le guidage transversal automatisé, et
- si aucun emplacement de stationnement n'a été reconnu, en actionnant les moyens d'actionnement (12, 13) commander automatiquement le véhicule en ligne droite sans braquage en marche avant ou en marche arrière.

2. Procédé conforme à la revendication 1,
comprenant en outre les étapes suivantes consistant à :
- transmettre (130) une information concernant la reconnaissance d'un emplacement de stationnement par le véhicule (1) à la télécommande (2) par l'intermédiaire d'une liaison de communication sans fil,
- du côté de la télécommande (2) recevoir (140) l'information concernant la reconnaissance d'un emplacement de stationnement (4), et
- du côté de la télécommande (2), et sur le fondement de l'information reçue signaler (150) la présence d'un emplacement de stationnement reconnu à l'opérateur (3) de la télécommande (2).

3. Procédé conforme à la revendication 2,
selon lequel
- du côté du véhicule (1), sur le fondement d'au moins un critère concernant la possibilité de se garer, il est déterminé que le véhicule peut être garé dans l'emplacement de stationnement (4) à partir de sa position actuelle par l'intermédiaire du système d'assistance au stationnement (5) par télécommande (2),
- du côté du véhicule (1), une information concernant la reconnaissance d'un emplacement de stationnement (4) dans lequel ce véhicule peut se garer est transmise à la télécommande (2),
- du côté de la télécommande (2), l'information concernant la reconnaissance d'un emplacement de stationnement (4) dans lequel le véhicule peut se garer est reçue, et
- du côté de la télécommande (2), la présence d'un emplacement de stationnement reconnu dans lequel le véhicule peut se garer, à partir de sa condition actuelle du véhicule par l'intermédiaire du système d'assistance au stationnement (5) par télécommande (2) est signalée à l'opérateur (3) de la commande (2).

4. Procédé conforme à la revendication 3,
selon lequel
le(les) critère(s) concernant la possibilité de se garer dans l'emplacement de stationnement concerne(nt) :
- l'orientation du véhicule par rapport à l'emplacement de stationnement,
- le décalage latéral (Δ_{SV}) du véhicule par rapport à l'emplacement de stationnement,
- la largeur de l'emplacement de stationnement, et
- la distance du véhicule à l'emplacement de stationnement.

5. Procédé conforme à l'une des revendications 3 et 4,
selon lequel :
- du côté du véhicule (1) au moins deux types différents de situations de stationnement avec un emplacement de stationnement dans lequel le véhicule peut se garer ayant des qualités différentes de possibilité de se garer dans l'emplacement de stationnement peuvent être distinguées,
- en cas de détermination d'une situation de stationnement avec un emplacement de stationnement dans lequel le véhicule peut se garer ayant une qualité élevée de possibilité de se garer dans l'emplacement de stationnement, une information concernant la présence d'une telle situation de stationnement est transmise à la télécommande (2), et après réception de cette information du côté de la télécommande (2), la présence d'un emplacement de stationnement dans lequel le véhicule peut se garer ayant une qualité élevée de possibilité de se garer est signalée à l'opérateur (3) de la télécommande (2), et
- en cas de détermination d'une situation de stationnement avec un emplacement de stationnement dans lequel le véhicule peut se garer ayant en comparaison une qualité plus faible de possibilité de garer le véhicule dans l'emplacement de stationnement, une information concernant la présence d'une telle situation de stationnement est transmise à la télécommande (2), et après réception de cette information du côté de la télécommande (2), la présence d'un emplacement de stationnement dans lequel le véhicule peut se garer ayant une qualité plus faible de possibilité de se garer est signalée à l'opérateur (3) de la télécommande (2).

6. Procédé conforme à l'une des revendications 2 à 5,
selon lequel du côté du véhicule (1) deux, trois, ou la totalité des types de situation de stationnement suivants peuvent être distingués :
- aucun emplacement de stationnement n'a été reconnu,
- un emplacement de stationnement dans lequel le véhicule peut se garer à partir de sa position actuelle par l'intermédiaire du système d'assistance au stationnement par télécommande a été reconnu,
- un emplacement de stationnement dans lequel le véhicule peut se garer à partir de sa position actuelle par l'intermédiaire du système d'assistance au stationnement (5) par télécommande (2) a été reconnu, la qualité de la possibilité de garer le véhicule dans l'emplacement de stationnement étant plus faible que dans le type de situation de stationnement précédent avec un emplacement de stationnement dans lequel le véhicule peut se garer, et
- un emplacement de stationnement dans lequel le véhicule ne peut pas se garer à partir de sa position actuelle par l'intermédiaire du système d'assistance au stationnement (5) par télécommande (2) a été reconnu.

7. Procédé conforme à la revendication 6,
selon lequel au moins deux types de situation de stationnement conforme à la revendication 6, peuvent être signalés par des signaux associés aux types de situation de stationnement individuels différents de façon à pouvoir être distingués par l'opérateur (3), en particulier dans le cas d'un écran (14) équipant la télécommande (2) par des pictogrammes (400, 401) associés aux types de situation de stationnement individuels différents.

8. Procédé conforme à l'une des revendications précédentes,
selon lequel il est signalé à l'opérateur (3) du côté de la télécommande (2) si le véhicule est commandé en ligne droite (1) sans braquage dans l'emplacement de stationnement (4) où si le véhicule (1) est commandé dans l'emplacement de stationnement (4) en étant dirigé par le guidage transversal automatisé.

9. Procédé conforme à l'une des revendications précédentes,
selon lequel
- lorsqu'un emplacement de stationnement a été reconnu sur le fondement de l'information d'environnement, une droite de stationnement (305) dans la direction longitudinale de l'emplacement de stationnement (4) est déterminée, et
- dans le cadre de la manœuvre consistant à garer le véhicule est commandé en marche avant ou en marche arrière dans l'emplacement de stationnement (4) en étant dirigé par le guidage transversal automatisé, l'axe longitudinal (306) du véhicule étant réglé en particulier régulé sur la droite de stationnement (305).

10. Procédé conforme à la revendication 9 et à la revendication 4, selon lequel :
- le critère concernant l'orientation du véhicule (1) par rapport à l'emplacement de stationnement (4) est contrôlé sur le fondement de l'orientation de l'axe longitudinal du véhicule (306) et de l'orientation de la droite de stationnement (305), et/ou
- le critère concernant le décalage latéral du véhicule par rapport à l'emplacement de stationnement est contrôlé sur le fondement de la longueur de la perpendiculaire d'un point de référence (308) du véhicule en particulier du milieu de l'essieu arrière à la droite de stationnement (305).

11. Procédé conforme à l'une des revendications 2 à 7,
selon lequel :
- la télécommande (2) comporte un indicateur optique (14), et
- le signalement à l'opérateur (3) de la télécommande (2) est effectué par l'intermédiaire de l'indicateur optique (14).

12. Procédé conforme à la revendication 11,
selon lequel :
- la télécommande comporte, en tant qu'indicateur optique, un écran (14), et
- le signalement à l'opérateur (3) de la télécommande (2) est effectué par l'intermédiaire de l'écran (14), en particulier sous la forme d'un pictogramme (400, 401) représenté sur l'écran.

13. Système d'assistance au stationnement (5) permettant de garer de façon automatisée un véhicule (1) dans un emplacement de stationnement (4) pouvant être contrôlé du côté du véhicule par la télécommande (2) à partir de l'extérieur du véhicule (1), dans lequel :
- le système d'assistance au stationnement (5) est adapté pour permettre de garer le véhicule dans des emplacements de stationnement en épi en marche avant et/ou en marche arrière,
- la télécommande (2) comporte des moyens d'actionnement (12) permettant de commander le déplacement en marche avant et/ou des moyens d'actionnement (13) permettant de commander le déplacement en marche arrière du véhicule, et
- le système d'assistance au stationnement (5) comporte un guidage (1) transversal automatisé pour permettre de commander le véhicule en le dirigeant automatiquement dans l'emplacement de stationnement (4), et
le système d'assistance au stationnement du côté du véhicule comporte en outre :
- un système de capteurs d'environnement (6a, 6b, 6c) permettant de déterminer une information d'environnement concernant l'environnement du véhicule, et
- des moyens de reconnaissance d'emplacements de stationnement (8) permettant de reconnaitre un emplacement de stationnement (4) sur le fondement de l'information d'environnement, et
le système d'assistance en stationnement est en outre réalisé pour permettre,
- lorsque aucun emplacement de stationnement n'a été reconnu, de commander automatiquement le véhicule en ligne droite sans braquage en marche avant ou en marche arrière en actionnant les moyens d'actionnement (12, 13), et
- lorsqu'un emplacement de stationnement a été reconnu, en actionnant les moyens d'actionnement (12, 13) de commander le véhicule dans l'emplacement de stationnement (4) en marche avant ou en marche arrière en étant dirigé par le guidage transversal automatisé.

14. Système d'assistance au stationnement conforme à la revendication 13,
comportant en outre :
- un dispositif de communication sans fil bidirectionnel (10) permettant de transmettre une information concernant la reconnaissance d'un emplacement de stationnement (4) du véhicule (1) à la télécommande (2).
